# EUROPEAN PATENT SPECIFICATION

(11) **EP 1 983 695 B1**
(45) Date of publication and mention of the grant of the patent: **19.05.2010**
(21) Application number: 06791079.4
(22) Date of filing: 22.09.2006
(51) Int. Cl.: H04L 12/56, H04L 29/06

(54) **A METHOD, AN APPARATUS AND A SYSTEM FOR CONTROLLING THE UPLINK TRAFFIC OF THE ACCESS NETWORK**
VERFAHREN, VORRICHTUNG UND SYSTEM ZUR STEUERUNG DES AUFWÄRTSVERKEHRS DES ZUGANGSNETZES
PROCÉDÉ, APPAREIL ET SYSTÈME DE RÉGULATION DE TRAFIC ASCENDANT DANS UN RÉSEAU D'ACCÈS

(30) Priority: 09.02.2006 CN 200610007328
(43) Date of publication of application: 22.10.2008
(73) Proprietor: Huawei Technologies Co., Ltd., Longgang District, Shenzhen Guangdong 518129 (CN)
(72) Inventor: WANG, Weiyang, Guangdong 518129 (CN); HUANG, Yong, Guangdong 518129 (CN); ZHANG, Keliang, Guangdong 518129 (CN)
(74) Representative: Casalonga, Axel
(86) International application number: PCT/CN2006/002489
(87) International publication number: WO 2007/090322

(56) References cited:
- WO-A1-01/06733
- US-A1- 2002 120 720
- US-A1- 2002 120 749
- US-A1- 2002 176 404
- US-A1- 2005 147 035
- US-A1- 2005 147 035
- US-B1- 6 396 837

## Description

### FIELD OF THE INVENTION

The present invention relates to the field of telecommunication and internet technology, and more particularly to a method, apparatus and system for controlling uplink traffic of an access network, which is adaptable to a Next Generation Network (NGN).

### BACKGROUND

NGN network architecture is defined in Telecommunication and Internet converged Services and Protocols for Advanced Networking (TISPAN), which is issued by European Telecommunication Standards Institute (ETSI). In the defined NGN network architecture, a Resource and Admission Control Subsystem (RACS) is introduced between the application layer and the transport layer, for the uniform administration of network resources, the formulation of session-based dynamic Quality of Service (QoS) policy and the corresponding QoS control.

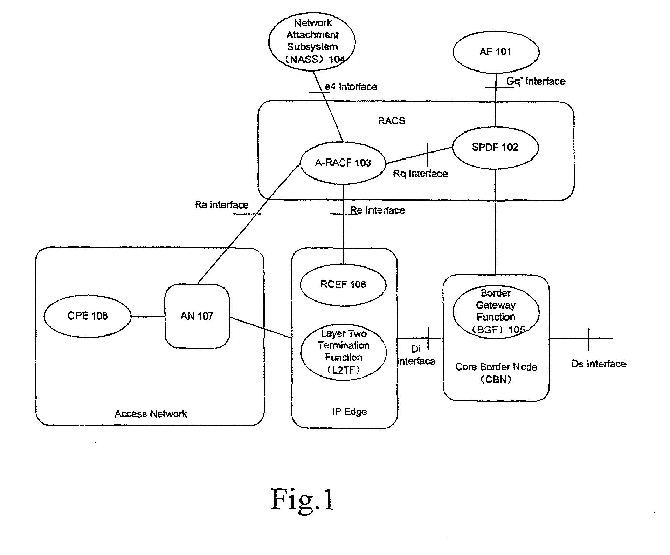

The RACS functional architecture is shown in Fig. 1, which only illustrates a RACS and the network elements directly related to the RACS as well as their connections. RACS mainly includes following functional entities:
Service-based Policy Decision Function (SPDF) 102, configured to grant a resource request from an Application Function (AF) 101;
Access-Resource Admission Control Function (A-RACF) 103, configured to make a corresponding policy for resource admission control (QoS policy) based on the granted resource request from SPDF 102, and execute the QoS policy by controlling a Resource Control Enforcement Function (RCEF) 106 or an Access Node (AN) 107.

The purpose of controlling AN 107 is to solve the traffic congestion problem at AN 107 so as to guarantee the QoS. The control on downlink traffic, which is sent from an upper level network to AN 107 and then to the access network, may be realized by A-RACF 103 controlling RCEF 106 of an IP edge. This ensures that the downlink traffic might not be congested at AN 107. The total uplink bandwidth from the Customer Premise Equipment (CPE) 108 to AN 107 may be larger than the total uplink bandwidth of AN 107. In this case, it cannot solve the uplink traffic congestion at AN 107 by just controlling the traffic at the IP Edge. Therefore, there is a need to design an appropriate QoS control method to solve the uplink traffic congestion at AN 107 in the access network.

Currently, there are two solutions for controlling the uplink traffic of an access network at AN 107 by a RACS :
in the first solution, RACS controls uplink traffic of an access network by controlling AN 107; and
in the second one, RACS controls the uplink traffic of an access network by controlling CPE 108.

The first solution requires AN 107 to perform a fine flow-based control, which places a strict requirement on the AN equipment and increases the cost and complexity in implementation. The problem of the second solution lies in that CPE 108, as a user equipment located at the user side, is undependable, while RACS cannot prevent malicious CPEs from sending unauthenticated data traffic, which will flood the network and cause congestion. As a result, the network between CPE 108 and the IP edge is unable to guarantee the QoS of the authorized data traffic. Additionally, US2005/147035A1 discloses a solution, in which the packet flows are controlled in the upstream direction (from the CPE 12) by a Customer Service Edge (CSE) 24, and controlled in the downstream direction (to the CPE) by a NSE 22. Since the CSE is a member of CPE, the CSE is also undependable, and thereby unauthenticated data traffic cannot be prevented in this solution.

### SUMMARY

In view of this, an objective of the present invention is to provide a method for controlling uplink traffic of an access network, which simplifies the control of an AN and lowers the requirements on an AN equipment while guaranteeing the QoS of user's traffic at the AN. Further, the method solves the problem in controlling the unauthorized uplink traffic from malicious user equipments.

The method of the present invention includes the following steps:
A. executing, by a customer premise equipment, a first data traffic policy that is delivered from a resource admission and control subsystem, and sending data traffic packets from the customer equipment to an access node;
B. executing, by the access node, a second data traffic policy that is delivered from a resource admission and control subsystem, on the received data traffic packets from the customer premise equipment, and sending, from the access node to an upper level network, the data traffic packets obtained by executing the second data traffic policy;
wherein the first data traffic policy and the second traffic policy delivered from the resource admission and control subsystem comprises: a logical channel identifier for identifying a logical channel to which the traffic corresponding to a currently delivered data traffic policy is forwarded, a data traffic priority for identifying a priority of the traffic corresponding to a currently delivered data traffic policy, and a bandwidth threshold for determining the maximum bandwidth of the traffic corresponding to a currently delivered data traffic policy, respectively;
the executing the first data traffic policy by the customer premise equipment (208) at step A further comprises:
A1. classifying an uplink data traffic according to a five-tuple;
A2. tagging identified data traffic with a priority tag and forwarding the tagged data traffic to a designated logical channel; and
A3. controlling actual bandwidth of the data traffic so that the actual bandwidth of the data traffic does not exceed the bandwidth threshold delivered to the customer premise equipment;
the executing the second data traffic policy on the received data traffic packets by the access node (207) at step B further comprises:
B1. classifying the received data traffic received on the logical channel from the customer premise equipment (208) into different traffic pipes according to the logical channel and the priority for the data traffic;
B2. scheduling and forwarding the received data traffic according to the priority, and controlling each of traffic pipes so that the actual bandwidth of data traffic in the traffic pipe does not exceed the bandwidth threshold delivered to the access node (207).

Preferably, the method further includes the following step prior to the step A:
receiving, by the customer premise equipment, the first data traffic policy from the resource admission and control subsystem via a Ru interface, and/or
receiving, by the access node, the second data traffic policy from the resource admission and control subsystem via a Ra interface.

Preferably, before receiving, by the access node, the second data traffic policy from the resource admission and control subsystem, the method further comprises:
receiving, by the access node, a request message for acquiring a QoS resource condition from the resource admission and control subsystem;
returning, by the access node, the QoS resource condition after receiving the request message.

Preferably, the method further includes following step after the step B:
C. receiving, by the customer premise equipment and the access node a message for deleting data traffic policy, from the resource admission and control subsystem, respectively;
D. deleting, by the customer premise equipment and the access node, their own data traffic policies, after receiving the data traffic policy deleting message.

Preferably, the step B1 includes classifying the received data traffic with the same priority and sent via the same logical channel into a same traffic pipe.

Another object of present invention lies in providing an access network. The access network includes a customer premise equipment and an access node, wherein the customer premise equipment and access node perform network packet interactions with each other via the connection therebetween, wherein: the customer premise equipment is adapted to execute a first data traffic policy that is delivered from a resource admission and control subsystem and to send data traffic packets to an access node; the access node is adapted to execute a second data traffic policy that is delivered from the resource admission and control subsystem on the received data traffic packets from the customer equipment and to send the data traffic packets obtained by executing the second data traffic policy
wherein the first data traffic policy and the second traffic policy delivered from the resource admission and control subsystem comprise a logical channel identifier for identifying a logical channel corresponding to a currently delivered traffic policy, a data traffic priority for identifying a priority of the traffic corresponding to a currently delivered data traffic policy, and a bandwidth threshold for determining the maximum bandwidth of the traffic corresponding to a currently delivered data traffic policy, respectively.

The access node further includes:
a traffic policy receiving module, configured to receive the second data traffic policy from the resource admission and control subsystem, and send the received second data traffic policy to a traffic policy executing module; and
a traffic policy executing module, configured to save the second data traffic policy from the traffic policy receiving module, and execute the second data traffic policy on the data traffic received from the customer premise equipment.

The traffic policy receiving module is further configured to receive a message for deleting data traffic policy, from the resource admission and control subsystem, and send the message of deleting data traffic policy to the traffic policy executing module; and
the traffic policy executing module is further configured to delete the saved data traffic policy.

Another object of present invention lies in providing a resource admission and control subsystem. The resource admission and control subsystem includes an access-resource admission and control function A-RACF and a service-based policy decision function SPDF, wherein the SPDF is configured to make a data traffic policy and send the made data traffic policy to the A-RACF, the A-RACF comprises:
a traffic policy generation module, configured to convert a data traffic policy received from SPDF and generate the first data traffic policy and the second data traffic policy,
wherein the first data traffic policy and the second data traffic policy are executed on an uplink data traffic, and the first data traffic policy and the second traffic policy delivered from the resource admission and control subsystem comprise a logical channel identifier for identifying a logical channel corresponding to a currently delivered traffic policy, a data traffic priority for identifying a priority of the uplink data traffic corresponding to a currently delivered data traffic policy, and a bandwidth threshold for determining the maximum bandwidth of the uplink data traffic corresponding to a currently delivered data traffic policy, respectively; and
a traffic policy delivering module, configured to deliver the first and second data traffic policies, which are generated by the traffic policy generation module, to the customer premise equipment and the access node respectively.

The traffic policy delivering module is further configured to deliver a message for deleting a data traffic policy to the customer premise equipment or the access node.

The resource admission and control subsystem is connected to the access node via a Ra interface; the resource admission and control subsystem is connected to the customer premise equipment via a Ru interface.

Preferably, the A-RACF comprises means for obtaining a QoS resource condition of the access node, wherein the QoS resource condition is obtained by transmitting a request message for requesting a QoS resource condition to the access node and receiving the QoS resource condition returned by the access node, or by looking up the locally stored records on QoS resource condition of the access node.

The first data traffic policy and the second traffic policy comprise a logical channel identifier for identifying a logical channel corresponding to the currently delivered traffic policy, respectively.

From the above technical solutions, it can be seen that the RACS controls both the CPE and AN simultaneously, and the CPE controls the uplink data traffic in cooperation with AN. It has the following advantages: the QoS for the traffic at AN can be guaranteed; AN schedules the data traffic according to the priority and logic route, which is simple to realize and reduces the complexity of AN equipment; it also makes it impossible for CPE to send data traffic having a bandwidth exceeding the authorized bandwidth, thereby efficiently preventing malicious users from attacking the network traffic by using CPE; moreover, the RACS controls both AN and CPE, which ensures that the understanding and execution of traffic policy at AN and CPE are consistent with each other, thereby effectively guaranteeing the QoS of user service.

### BRIEF DESCRIPTION OF THE DRAWINGS

Fig. 1 is a schematic diagram showing a functional architecture of a RACS in the

### prior art;

Fig. 2 is a schematic diagram showing a functional architecture of a RACS according to an embodiment of the present invention;

Fig. 3 is a flow chart of controlling uplink traffic of an access network according to an embodiment of the present invention;

Fig. 4 is a schematic diagram showing the structure of an A-RACF according to an embodiment of the present invention;

Fig. 5 is a schematic diagram showing the structure of a Customer Premise Equipment according to an embodiment of the present invention;

Fig. 6 is a schematic diagram showing the structure of an access node according to an embodiment of the present invention.

### DETAILED DESCRIPTION

In order to make the objects, technical solutions and advantages of the disclosure more apparent, a further detailed description of the disclosure is given below with reference to the accompany drawings.

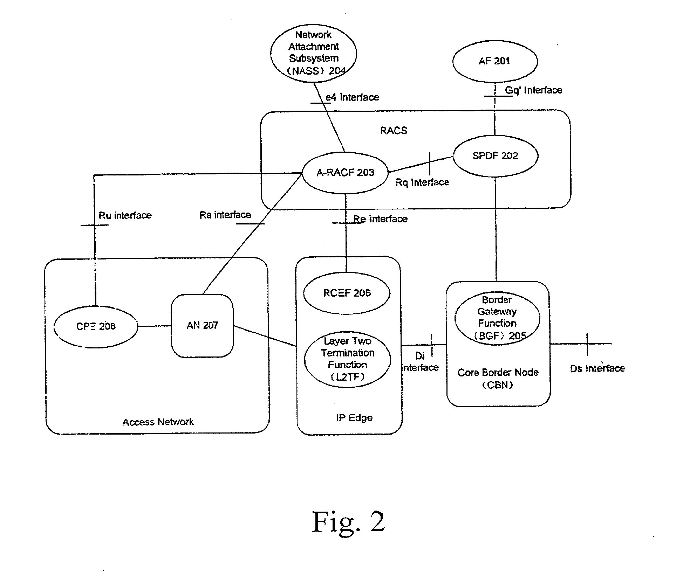

The essential contents of the solutions in present invention lie in that RACS controls both AN and CPE so that the purpose of controlling the uplink traffic of the access network may be achieved by combining the controls at both AN and CPE. Fig. 2 shows a functional architecture of a RACS, which is defined according to an embodiment of the present invention. The RACS of Fig. 2 differs from the conventional one in that: an interaction between RACS and CPE is added on the basis of the conventional RACS functional architecture as shown in Fig. 1. That is, A-RACF 203 and CPE 208 may interact with each other via a Ru interface therebetween, as shown in Fig. 2.

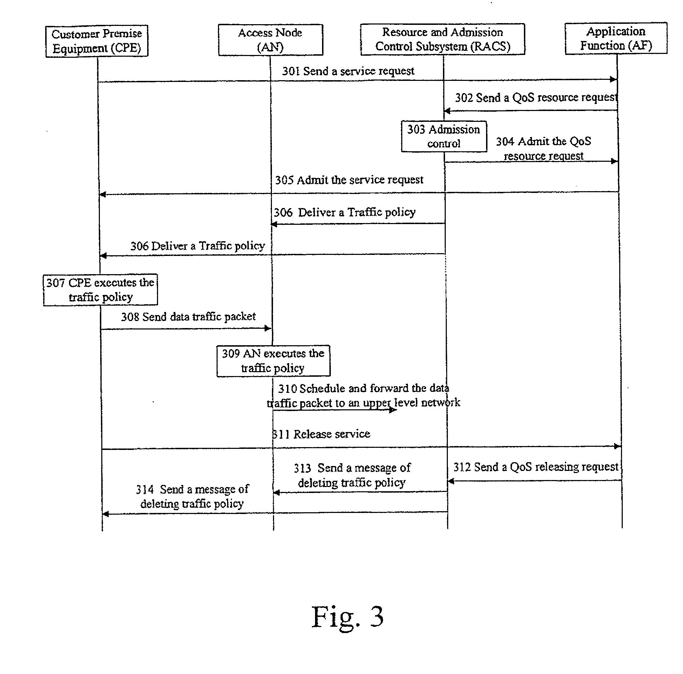

Fig. 3 illustrates a flow chart of controlling uplink traffic of an access network, which is defined according to a RACS with the functional architecture shown in Fig.2, and includes following steps.

Block 301: CPE 208 sends a service request to AF 201. Here, the connection for the interaction between CPE 208 and AF 201 is not shown in Fig. 2.

Block 302: AF 201 acquires a corresponding QoS resource request based on the received service request, and sends the QoS resource request to RACS. Specifically, the QoS resource request is forwarded to A-RACF 203 via SPDF 202.

Block 303: upon receiving the QoS resource request, A-RACF 203 first acquires a QoS subscription profile of the subscriber through an interaction with NASS 204. A-RACF 203 then decides whether the received QoS resource request may be admitted according to the acquired QoS subscription profile and the QoS resource condition of AN 207. If the QoS resource request is to be admitted, A-RACF 203 informs SPDF 202 to make a corresponding traffic policy and the message flow proceeds to block 304. If the QoS resource request cannot be admitted, RACS returns a denying message for denying admission to CPE 208 via AF 201 and the message flow is ended. Here, the QoS resource condition of AN 207 may be acquired by A-RACF 203 in such a manner that A-RACF 203 sends a request message to AN 207 for acquiring the QoS resource condition and AN 207 returns the QoS resource condition to A-RACF 203 after receiving the request message. Alternatively, the QoS resource condition of AN 207 may be acquired through looking up the locally stored records on QoS resource condition of AN 207 by A-RACF 203.

Blocks 304∼305: RACS sends to AF 201 a message for admitting the QoS resource request. Upon receiving the message, AF 201 informs CPE 208 that the service request has been admitted.

Block 306: A-RACF 203 of RACS delivers a traffic policy, which is received from SPDF 202, to CPE 208 and AN 207 via a Ru interface and a Ra interface, respectively.

Blocks 307∼308: CPE 208 executes the received traffic policy. The executing of the received traffic policy includes the steps of: performing fine classification on traffics, determining a logical channel for each traffic flow identifying a priority for each traffic flow, and controlling the volume of the traffic flow. After executing the traffic policy, CPE 208 sends the data traffic packets to AN 207.

Blocks 309∼310: AN 207 executes the corresponding traffic policy on the data traffic packets received from CPE 208. The execution of the corresponding traffic policy includes the processes of: scheduling and forwarding the data traffic packets based on their logical channel and priority identifier, and controlling the volume of traffic flow. After executing the traffic policy, AN 207 forwards the data traffic packets to an upper level network

Block 311: When the service ends, CPE 208 sends a service releasing message to AF 207.

Block 312: AF 207 acquires a corresponding QoS resource releasing request based on the received service releasing message, and forwards the QoS resource releasing request to RACS;

Blocks 313∼314: A-RACF 203 of RACS sends a traffic policy deleting message to AN 207 and CPE 208 via a Ra interface and a Ru interface, respectively. AN 207 and CPE 208 delete their own traffic policy respectively, after receiving the traffic policy deleting message, and thereby the whole message flow ends.

In the above flow, the traffic policy that A-RACF 203 of RACS sends to CPE 208 via the Ru interface at block 306 includes the following traffic policy parameters specifically:

five-tuple including protocol type, source IP address, destination IP address, source port number and destination port number, for identifying the data traffic on which the currently delivered traffic policy is required to be executed;

logical channel identifier, for identifying a logical channel to which the traffic corresponding to the currently delivered traffic policy should be forwarded, for example, Permanent Virtual Circuit (PVC) or Virtual Local Area Net (VLAN);

Data traffic priority, for identifying a priority of the traffic corresponding to the currently delivered traffic policy;

Bandwidth threshold, for determining the maximum bandwidth of a traffic corresponding to the currently delivered traffic policy and being able to be sent by the CPE 208.

The Block 307 of executing the received traffic policy at CPE 208 specifically includes the following steps:
traffic classifying the uplink data traffic based on the five-tuple;
tagging the identified data traffic with a designated priority tag; and
forwarding the tagged data traffic to a designated logical channel , while controlling the actual bandwidth of the data traffic not to exceed the bandwidth threshold.

In the above flow , the traffic policy sent from A-RACF 203 of RACS to AN 207 via the Ra interface at block 306 specifically includes the following traffic policy parameters:

Logical channel identifier, for identifying a logical channel, such as PVC or VLAN, which corresponds to the currently delivered traffic policy;

Data traffic priority, for identifying and indicating a priority of a traffic that corresponds to the currently delivered traffic policy;

Bandwidth threshold, for determining the maximum bandwidth of the data traffic having the identified priority that can be allowed to access AN 207.

The block 309, where the AN 207 executing the received traffic policy specifically includes the following steps:
based on the logical channel and the priority, classifying the data traffic received on the logical channel into different traffic pipes according to a priority for the data traffic, in which data traffic coming from different logical channel with the same priority may be classified into the same traffic pipe, and each traffic pipe for each priority and the pipes for different logical routes are independent of each other;
scheduling and forwarding the data traffic according to the priority, and controlling the volume of data traffic according to the pipe, so that the actual bandwidth of data traffic in each pipe does not exceed the bandwidth threshold of AN 207.

To realize the above inventive method, respective means are required in A-RACF, AN and CPE to implement the corresponding functions.

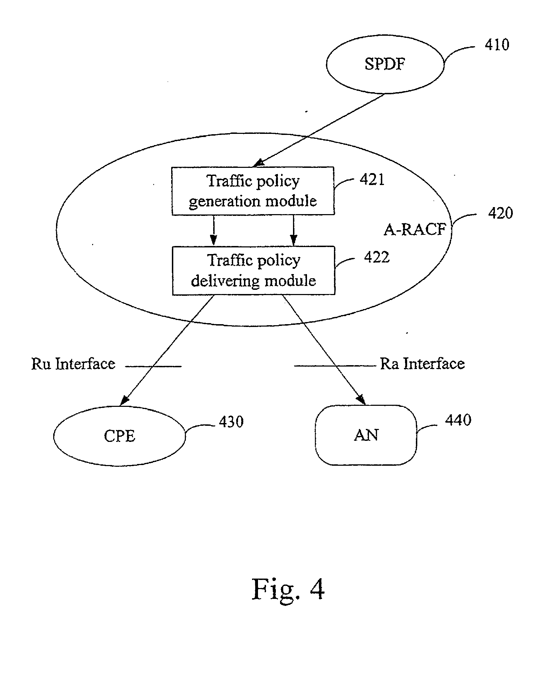

The newly-added modules in A-RACF according to an embodiment of the present invention are shown in Fig. 4, which include the following modules:

Traffic policy generation module 421, configured to convert the data traffic policy received from SPDF 410 and generate data traffic policies of CPE and AN, respectively;

Traffic policy delivering module 422, configured to deliver the data traffic policy of CPE generated by the traffic policy generation module 421 to CPE 430 via a Ru interface, and delivering the data traffic policy of AN generated by the traffic policy generation module 421 to AN 440 via a Ra interface. The traffic policy delivering module is also configured to deliver information for deleting traffic policy to CPE or AN.

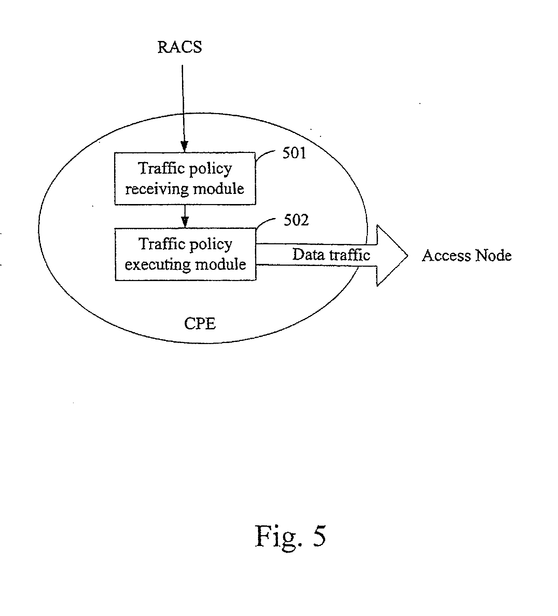

The newly-added modules in CPE according to an embodiment of the present invention are shown in Fig. 5, which include:
traffic policy receiving module 501, configured to receive the data traffic policy from the RACS and send the received data traffic policy to a traffic policy executing module 502;
traffic policy executing module 502, configured to save the data traffic policy received from the traffic policy receiving module 501, and execute the data traffic policy on the data traffic to be sent to AN.

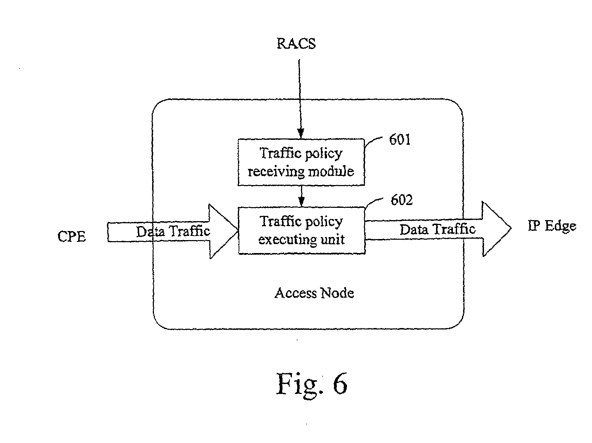

The newly-added modules in AN according to an embodiment of the present invention are shown in Fig. 6, which include:
traffic policy receiving module 601, configured to receive the data traffic policy from the RACS and send the received data traffic policy to the traffic policy executing module 602;
traffic policy executing module 602, configured to save the data traffic policy received from the traffic policy receiving module 601, execute the data traffic policy on the data traffic received from the CPE, and then send the data traffic to an IP edge node.

In the technical solution of the present invention, the control processing on the uplink traffic of an access network is allocated to CPE and AN, respectively, which are both controlled by the RACS. This solution has the following advantages:
the QoS of user service is guaranteed at AN;
AN schedules the data traffic according to the priority and logical channel, which is simple to realize, and reduces the complexity of AN equipment;
AN controls data traffic according to the logical channel and priority, which makes it impossible for CPE to send data traffic having a bandwidth exceeding the authorized bandwidth, thereby efficiently preventing malicious users from attacking the network traffic by using CPE;
RACS controls both AN and CPE, which ensures that the understanding and execution of traffic policy at AN and CPE are consistent with each other, thereby effectively guaranteeing the QoS of user service.

The above is only preferred embodiments of the disclosure, and is not intended to limit the scope of the disclosure. Any modification, equivalent substitution and improvement within the scope of the disclosure as defined by the appended claims.

## Claims

1. A method for controlling uplink traffic of an access network, comprising the steps of:
A. executing, by a customer premise equipment (208), a first data traffic policy that is delivered from a resource admission and control subsystem, and sending data traffic packets from the customer premise equipment (208) to an access node (207); **characterized in that**
B. executing, by the access node (207), a second data traffic policy that is delivered from the resource admission and control subsystem, on the received data traffic packets from the customer premise equipment (208), and sending, from the access node (207) to an upper level network, the data traffic packets obtained by executing the second data traffic policy;
wherein the first data traffic policy and the second traffic policy delivered from the resource admission and control subsystem comprises: a logical channel identifier for identifying a logical channel to which the traffic corresponding to a currently delivered data traffic policy is forwarded, a data traffic priority for identifying a priority of the traffic corresponding to a currently delivered data traffic policy, and a bandwidth threshold for determining the maximum bandwidth of the traffic corresponding to a currently delivered data traffic policy, respectively;
the executing the first data traffic policy by the customer premise equipment (208) at step A further comprises the steps of:
A1. classifying an uplink data traffic according to a five-tuple;
A2. tagging identified data traffic with a priority tag and forwarding the tagged data traffic to a designated logical channel; and
A3. controlling actual bandwidth of the data traffic so that the actual bandwidth of the data traffic does not exceed the bandwidth threshold delivered to the customer premise equipment;
the executing the second data traffic policy on the received data traffic packets by the access node (207) at step B further comprises the steps of:
B1. classifying the received data traffic received on the logical channel from the customer premise equipment (208) into different traffic pipes according to the logical channel and the priority for the data traffic;
B2. scheduling and forwarding the received data traffic according to the priority, and controlling each of traffic pipes so that the actual bandwidth of data traffic in the traffic pipe does not exceed the bandwidth threshold delivered to the access node (207).

2. The method of claim 1, further comprising the following steps prior to the step A::
receiving, by the customer premise equipment (208), the first data traffic policy from the resource admission and control subsystem via a Ru interface, and/or
receiving, by the access node (207), the second data traffic policy from the resource admission and control subsystem via a Ra interface.

3. The method of claim 2, wherein before receiving, by the access node (207), the second data traffic policy from the resource admission and control subsystem, the method further comprises the steps of:
receiving, by the access node (207), a request message for acquiring a QoS resource condition from the resource admission and control subsystem;
returning, by the access node (207), the QoS resource condition after receiving the request message.

4. The method of claim 1, further comprising following steps after the step B:
C. receiving, by the customer premise equipment (208) and the access node (207), a message for deleting data traffic policy from the resource admission and control subsystem, respectively;
D. deleting, by the customer premise equipment (208) and the access node (207), their own data traffic policies, after receiving the message for deleting data traffic policy.

5. The method of claim 1, 2, 3, or 4, wherein the step B1 comprises classifying the received data traffic with the same priority and sent via the same logical channel into a same traffic pipe.

6. An access network, comprising a customer premise equipment (208) and an access node (207), wherein the customer premise equipment (208) and access node (207) perform network packet interactions with each other via the connection therebetween, wherein:
the customer premise equipment (208) is adapted to execute a first data traffic policy that is delivered from a resource admission and control subsystem and to send data traffic packets to an access node;
**characterized in that**
the access node (207) is adapted to execute a second data traffic policy that is delivered from the resource admission and control subsystem on the received data traffic packets from the customer equipment (208) and to send the data traffic packets to an upper level network obtained by executing the second data traffic policy;
wherein the first data traffic policy and the second traffic policy delivered from the resource admission and control subsystem comprise a logical channel identifier for identifying a logical channel corresponding to a currently delivered traffic policy, a data traffic priority for identifying a priority of the traffic corresponding to a currently delivered data traffic policy, and a bandwidth threshold for determining the maximum bandwidth of the traffic corresponding to a currently delivered data traffic policy, respectively.

7. The access network of claim 6, wherein the access node comprises:
a traffic policy receiving module (601), configured to receive the second data traffic policy from the resource admission and control subsystem, and send the received second data traffic policy to a traffic policy executing module; and
a traffic policy executing module (602), configured to save the second data traffic policy from the traffic policy receiving module (601), and execute the second data traffic policy on the data traffic received from the customer premise equipment (208).

8. The access network of claim 7, wherein, the traffic policy receiving module (601) is further configured to receive a message for deleting data traffic policy from the resource admission and control subsystem, and send the message for deleting data traffic policy to the traffic policy executing module (602); and
the traffic policy executing module (602) is further configured to delete the saved data traffic policy.

9. A resource admission and control subsystem comprising an access-resource admission and control function, A-RACF, and a service-based policy decision function, SPDF, wherein the SPDF is configured to make a data traffic policy and to send the data traffic policy to the A-RACF, and **characterized in that**
the A-RACF comprises:
a traffic policy generation module (421), configured to convert a data traffic policy received from SPDF and generate a first data traffic policy and a second data traffic policy, wherein the first data traffic policy and the second data traffic policy are executed on an uplink data traffic, and the first data traffic policy and the second traffic policy delivered from the resource admission and control subsystem comprise a logical channel identifier for identifying a logical channel corresponding to a currently delivered traffic policy, a data traffic priority for identifying a priority of the uplink data traffic corresponding to a currently delivered data traffic policy, and a bandwidth threshold for determining the maximum bandwidth of the uplink data traffic corresponding to a currently delivered data traffic policy, respectively; and
a traffic policy delivering module (422), configured to deliver the first data traffic policy to the customer premise equipment and deliver the second data traffic policy to the access node (207) respectively.

10. The subsystem of claim 9, wherein,
the resource admission and control subsystem is connected to the access node (207) via a Ra interface;
the resource admission and control subsystem is connected to the customer premise equipment (208) via a Ru interface.

11. The subsystem of claim 9 or 10, wherein the A-RACF comprises:
means for obtaining a QoS resource condition of the access node, wherein the QoS resource condition is obtained by transmitting a request message for requesting a QoS resource condition to the access node and receiving the QoS resource condition returned by the access node, or by looking up the locally stored records on QoS resource condition of the access node.

## Patentansprüche

1. Verfahren zur Steuerung von Aufwärtsstreckenverkehr eines Zugangsnetzes, mit den folgenden Schritten:
A. Ausführen einer ersten Datenverkehrsrichtlinine durch ein Teilnehmergerät (208), die von einem Betricbsmittelzulassungs- und -steuersubsytem abgeliefert wird, und Senden von Datenverkehrspaketen von dem Teilnehmergerät (208) zu einem Zugangsknoten (207); **gekennzeichnet durch**
B. Ausführen einer zweiten Datenverkehrsrichtlinie **durch** den Zugangsknoten (207), die von dem Betriebsmittelzulassungs- und steuersubsystem abgeliefert wird, an den empfangenen Datenverkchrspaketen aus dem Teilnehmergerät (208) und Senden der **durch** Ausführen der zweiten Datenverkehrsrichtlinie erhaltenen Datenverkehrspakete von dem Zugangsknoten (207) zu einem Netz der oberen Ebene;
wobei die erste Datenverkehrsrichtlinie und die zweite Verkehrsrichtlinie, die von dem Betriebsmittelzulassungs- und -steuersubsystem abgeliefert werden, Folgendes umfassen: eine Kennung eines logischen Kanals zum Identifizieren eines logischen Kanals, zu dem der einer gerade abgelieferten Datenverkebrsriehtlinie entsprechende Verkehr weitergeleitet wird, eine Datenverkehrspriorität zum Identifizieren einer Priorität des einer gerade abgelieferten Dutenverkehrsrichtlinie entsprechenden Verkehrs bzw. eine Bandbreitenschwelle zum Bestimmen der maximalen Bandbreite des einer gerade abgelieferten Datenverkehrsichtlinie entsprechenden Verkehrs;
wobei das Ausführen der ersten Datenverkehrsrichtlinie **durch** das Teilnehmergerät (208) im Schritt A ferner die folgenden Schritte umfasst:
A1. Klassifizieren eines Aufwärtsstreckcndatcnverkehrs gemäß einem Fünf-Tuple;
A2. Etikettieren des identilizierten Datenverkehrs mit einem Prioritäts-Tag und Weiterleiten des etikettierten Datenverkehrs zu einem designierten logischen Kanal; und
A3. Steuern von tatsächlicher Bandbreite des Datenverkehrs dergestalt, dass die tatsächliche Bandbreite des Datenverkehrs die an das Teilnehmergerät abgelieferte Bandbreitenschwelle nicht überschreitet;
wobei das Ausführen der zweiten Datcnverkchrsrichtlinie an den empfangenen Datcnverkehrspaketen **durch** den Zugangsknoten (207) im Schritt B ferner die folgenden Schritte umfasst:
B1. Klassifizieren des empfangenen Datenverkehrs, der auf dem logischen Kanal aus dem Teilnehmergerät (208) empfangen wird, zu verschiedenen Verkehrspipelines gemäß dem logischen Kanal und der Priorität für den Datenverkehr;
B2. Einheilen und Weiterleiten des empfangenen Datenverkehrs gemäß der Priorität und Steuern jeder der Verkehrspipelines dergestalt, dass die tatsächliche Bandbreite des Datenverkehrs in der Verkehrspipeline die an den Zugangsknoten (207) abgelieferte Bandbreitenschwelle nicht überschreitet.

2. Verfahren nach Anspruch 1, ferner mit den folgenden Schritten vor Schritt A:
Empfangen der ersten Datenverkehrsrichtlinie durch das Teilnehmergerät (208) von dem Betricbsmiltelzulassungs- und -steuersubsystem über eine Ru-Schnittstelle und/oder
Empfangen der zweiten Datenverkehrsrichtlinie durch den Zugangsknoten (207) von dem Betriebsmittelzulassungs- und -steuersubsystem über eine Ra-Schnittstelle.

3. Verfahren nach Anspruch 2, wobei das Verfahren vor dem Empfangen der zweiten Datenverkehrsriehtline durch den Zugangsknoten (207) von dem Betriehsmittelzulassungs- und -steuersubsystem ferner die folgenden Schritte umfasst:
Empfangen einer Anforderungsnaehricht zum Beschaffen eines QoS-Betriebsmittelzustands durch den Zugangsknoten (207) von dem Betriebsmittelzulassungs- und -steuersubsystem;
Zurückgeben des QoS-Betricbsmittelzustands durch den Zugangsknoten (207) nach dem Empfang der Anforderungsnachrieht.

4. Verfahren nach Anspruch 1, ferner mit den folgenden Schritten nach Schritt B:
C. Empfangen einer Nachricht zum Löschen einer Datenverkehrsrichtlinie durch das Teimehmergerät (208) und den Zugungsknoten (207) jeweils von dem Betriebsmittclzulassungs- und -steuersubsystem;
D. Löschen ihrer eigenen Datenverkehrsrichtlinien durch das Teilnehmergerät (208) und den Zugangsknoten (207) nach dem Empfang der Nachricht zum Löschen der Datenverkehrsrichtlinie.

5. Verfahren nach Anspruch 1, 2, 3 oder 4, wobei Schritt B1 das Klassifizieren des empfangenen Datenverkehrs mit derselben Priorität und über denselben logischen Kanal gesendet zu einer selben Verkehrspipeline umfasst.

6. Zugangsnetz mit einem Teilnehmergerät (208) und einem Zugangsknoten (207),
wobei das Teilnehmergerät (208) und der Zugangsknoten (207) über die Verbindung dazwischen Netzpaketinteraktionen miteinander ausführen, wobei:
das Teilnehmergerät (208) dafür ausgelegt ist, eine erste Datenverkehrsriehtlinie auszuführen, die von einem Betriebsmittelzulassungs- und -steuersubsystem abgeliefert wird, und Datenverkehrspakete zu einem Zugangsknoten zu senden; **dadurch gekenntzeichnet, dass**
der Zugangsknoten (207) dafür ausgelegt ist, eine zweite Datenverkchrsrichtlinie, die von dem Betriebsmittelzulassungs- und -steuersubsystem abgeliefert wird, an den empfangenen Datenverkehrspaketen aus der Teilnehmereinrichtung (208) auszuführen und die Datenverkehrspakete zu einem Netz der oberen Ebene zu senden, die durch Ausführen der zweiten Datenverkehrsriehtlinie erhalten werden;
wobei die erste Datenverkehrsrichtlinie und die zweite Verkehrsrichtlinie, die von dem Betriebsmittelzulassungs- und -steuersubsystem abgeliefert werden, Folgendes umfassen: eine Kennung eines logischen Kanals zum Identifizieren eines logischen Kanals, der einer gerade abgelieferten Verkehrsrichtlinie entspricht, eine Datenverkehrspriorität zum Identifizieren einer Priorität des einer gerade abgelieferten Datenverkehrsrichtlinie entsprechenden Verkehrs bzw. eine Bandbrvitenschwelle zum Bestimmen der maximalen Bandbreite des einer gerade abgelieferten Datenverkehrsrichtlinie entsprechenden Verkehrs.

7. Zugangsnetz nach Anspruch 6, wobei der Zugangsknoten Folgendes umfasst:
ein Verkehrsrichtliniencmpfangsmodul (601), das dafür ausgelegt ist, die zweite Datenverkehrsriehtlinie von dem Betricbsmittelzulassungs- und -steuersubsystem zu empfangen und die empfangene zweite Datenverkehrsriehtline zu einem Verkehrsrichtlinienausführungsmodul zu senden; und
ein Verkehrsrichtlinienausführungsmodul (602), das dafür ausgelegt ist, die zweite Datenverkehrsrichtlinie aus dem Verkehrsrichtlinienausführungsmodul (601) abzuspcichern und die zweite Datenverkehrsrichtlinie an dem aus dem Teilnehmergerät (208) empfangenen Datenverkehr auszuführen.

8. Zugangsnetz nach Anspruch 7, wobei das Verkehrsrichtlinienausführungsmodul (601) ferner dafür ausgelegt ist, eine Nachricht zum Löschen einer Datenverkehrsrichtlinie von dem Betriebsmiltelzulassungs- und -steuersubsystem zu empfangen und die Nachricht zum Löschen einer Datenverkchrsrichtlinie zu dem Verkehrsrichtlinienausführungsmodul (602) zu senden; und das Verkehrsrichtlinienausführungsmodul (602) ferner dafür ausgelegt ist, die abgespeicherte Datenverkehrsrichtlinie zu löschen.

9. Betricbsmittelzulassungs- und -steuersubsystem mit einer Betriebsmittelzugriffszulassungs- und steuerfunktion A-RACF und einer auf Diensten basierenden Riehtlnienentscheidungsfunktion SPDF, wobei die SPDF dafür ausgelegt ist, eine Datenverkehrsrichtlinie zu erstellen und die Datenverkehrsrichtlinie zu der A-RACF " zu senden, **dadurch gekennzeichnet, dass**
die A-RACF Folgendes umfasst:
ein Verkehrsrichtlinienausführungsmodul (421), das dafür ausgelegt ist, eine aus der SPDF empfangene Datenverkehrsrichtlinie umzusetzen und eine erste Datenverkehrsriehtlinie und eine zweite Datenverkehrsrichtline zu erzeugen, wobei die erste Datenverkehrsrichtlinie und die zweite Datenverkehrsriehtlinie an einem Aufwärtsstreekendatenverkehr ausgeführt werden und die erste Datemverkehrsriehtlinie und die zweite Verkehrsrichtlinie, die aus dem Betriehsmittelzulassungs- und steuersubsystem abgeliefert werden, eine Kennung eines logischen Kanals zum Identifizieren eines logischen Kanals entsprechend einer gerade abgelieferten Verkehrsrichtlinie, eine Datenverkchrspriorität zum Identifizieren einer Priorität des Aufwärtsstreckendatenverkehrs entsprechend einer gerade abgelieferten Datenverkehrsrichttinie bzw. eine Bandbreitensehwelle zum Bestimmen der maximalen Bandbreite des Aufwärtsstreckendatenverkehrs entsprechend einer gerade abgelieferten Datenverkehrsriehtlinie umfassen, und
ein Verkehrsrichtlinienausführungsmodul (422), das dafür ausgelegt ist, die erste Datenverkehrsrichtlinie an das Teilnehmergerät abzuliefern bzw. die zweite Datenverkehrsrichtlinie an den Zugangsknoten (207) abzuliefern.

10. Subsystem nach Anspruch 9, wobei
das Betriebsmittelzulassungs- und steuersubsystem über eine Ra-Schnittstelle mit dem Zugangsknoten (207) verbunden ist;
das Betriebsmittelzulassungs- und -steuersubsystem über eine Ru-Selinittstelle mit dem Teilnehmergerät (208) verbunden ist.

11. Subsystem nach Anspruch 9 oder 10, wobei die A-RACF Folgendes umfasst:
Mittel zum Erhalten eines QoS-Betriebsmittelzustands des Zugangsknotens, wobei der QoS-Betriebsmittelzustand durch Senden einer Anforderungsnaehricht zum Anfordern eines QoS-Betriebsmittelzustands zu dem Zugangsknoten und Empfangen des von dem Zugangsknoten zurückgegebenen OoS-Betriebsmittelzustands oder durch Nachsehlagen der lokal gespeicherten Datensätze über den QoS-Betriebsmittelzustand des Zugangsknotens erhalten wird.

## Revendications

1. Procédé de commande du trafic ascendant d'un réseau d'accès, comprenant les étapes suivantes :
A. exécution, par un équipement d'abonné (208), d'une première politique de trafic de données qui est délivrée par un sous-système d'admission et de commande de ressources, et envoi de paquets de trafic de données par l'équipement d'abonné (208) à un noeud d'accès (207) ;
B. exécution, par le noeud d'accès (207), d'une seconde politique de trafic de données qui est délivrée par le sons-système d'admission et de commande de ressources, sur les paquets de trafic de données reçus depuis l'équipement d'abonné (208), et envoi, par le noeud d'accès (207) à un réseau de niveau supérieur, des paquets de trafic de données obtenus en exécutant la seconde politique de trafic de données :
dans lequel la première politique de trafic de données et la seconde politique de trafic délivrées par le sous-système d'admission et de commande de ressources comprennent : un identifiant de canal logique pour identifier un canal logique auquel le trafic correspondant à une politique de trafic de données présentement délivrée est transmis, une priorité de trafic de données pour identifier une priorité du trafic correspondant à une politique de trafic de données présentement délivrée, et un seuil de largeur de bande pour déterminer la largeur de bande maximum du trafic correspondant à une politique de trafic de données présentement délivrée, respectivement ;
l'exécution de la première politique de trafic de données par l'équipement d'abonné (208) à l'étape A comprend en outre les étapes suivantes :
A1. classification d'un trafic de données ascendant selon un 5-tuplet ;
A2. étiquetage du trafic de données identifié avec une étiquette de priorité et transmission du trafic de données étiqueté à un canal logique désigné ; et
A3. régulation de la largeur de bande effective du trafic de données de telle sorte que la largeur de bande effective du trafic de données ne dépasse pas le seuil de largeur de bande délivré à l'équipement d'abonné ;
l'exécution de la seconde politique de trafic de données sur les paquets de trafic de données reçus par le noeud d'accès (207) à l'étape B comprend en outre les étapes suivantes :
B1. classification du trafic de données reçu sur le canal logique depuis l'équipement d'abonné (208) en différents pipelines de trafic en fonction du canal logique et de la priorité du trafic de données ;
B2. ordonnancement et transmission du trafic de données reçu en fonction de la priorité, et régulation de chacun des pipelines de trafic de telle sorte que la largeur de bande effective du trafic de données dans le pipeline de trafic ne dépasse pas le seuil de largeur de bande délivré au noeud d'accès (207).

2. Procédé selon la revendication 1, comprenant en outre les étapes suivantes avant l'étape A :
réception, par l'équipement d'abonné (208), de la première politique de trafic de données depuis le sous-système d'admission et de commande de ressources par l'intermédiaire d'une interface Ru, et/ou
réception, par le noeud d'accès (207), de la seconde politique de trafic de données depuis le sous-système d'admission et de commande de ressources par l'intermédiaire d'une interface Ra.

3. Procédé selon la revendication 2, comprenant en outre, avant la réception par le noeud d'accès (207) de la seconde politique de trafic de données depuis le sous-système d'admission et de commande de ressources, les étapes suivantes :
réception, par le noeud d'accès (207), d'un message de requête pour acquérir une condition de ressource de QoS depuis le sous-système d'admission et de commande de ressources ;
renvoi, par le noeud d'accès (207), de la condition de ressource de QoS après la réception du message de requête.

4. Procédé selon la revendication 1, comprenant en outre les étapes suivantes après l'étape B :
C. réception, par l'équipement d'abonné (208) et le noeud d'accès (207), d'un message de suppression de politique de trafic de données depuis le sous-système d'admission et de commande de ressources, respectivement ;
D. suppression, par l'équipement d'abonné (208) et le noeud d'accès (207), de leurs propres politiques de trafic de données, après la réception du message de suppression de politique de trafic de données.

5. Procédé selon la revendication 1, 2, 3 ou 4, dans lequel l'étape B1 comprend la classification du trafic de données reçu de la même priorité et envoyé par l'intermédiaire du même canal logique dans un même pipeline de trafic.

6. Réseau d'accès, comprenant un équipement d'abonné (208) et un noeud d'accès (207),
dans lequel l'équipement d'abonné (208) et le noeud d'accès (207) exécutent des interactions de parquets de réseau l'un avec l'autre par l'intermédiaire de la connexion entre eux, dans lequel :
l'équipement d'abonné (208) est adapté pour exécuter une première politique de trafic de données qui est délivrée par un sous-système d'admission et de commende de ressources et envoyer des paquets de trafic de données à un noeud d'accès ; **caractérisé en ce que**
le noeud d'accès (207) est adapté pour exécuter une seconde politique de trafic de données qui est délivrée par le sous-système d'admission et de commande de ressources, sur les paquets de trafic de données reçus depuis l'équipement d'abonné (208) et envoyer à un réseau de niveau supérieur les paquets de trafic de données obtenus en exécutant la seconde politique de trafic de données ;
dans lequel la première politique de trafic de données et la seconde politique de trafic délivrées par le sous-système d'admission et de commande de ressources comprennent : un identifiant de canal logique pour identifier un canal logique correspondant à une politique de trafic présentement délivrée, une priorité de trafic de données pour identifier une priorité du trafic correspondant à une politique de trafic de données présentement délivrée, et un seuil de largeur de bande pour déterminer la largeur de bande maximum du trafic correspondant à une politique de trafic de données présentement délivrée, respectivement.

7. Réseau d'accès selon la revendication 6, dans lequel le noeud d'accès comprend :
un module de réception de politique de trafic (601), configuré pour recevoir la seconde politique de trafic de données depuis le sous-système d'admission et de commande de ressources et envoyer la seconde politique de trafic de données reçue à un module d'exécution de politique de trafic ; et
un module d'exécution de politique de trafic (602), configuré pour sauvegarder la seconde politique de trafic de données provenant du module de réception de politique de trafic (601) et exécuter la seconde politique de trafic de données sur le trafic de données reçu depuis l'équipement d'abonné (208).

8. Réseau d'accès selon la revendication 7, dans lequel le module de réception de politique de trafic (601) est configuré en outre pour recevoir un message de suppression de politique de trafic de données depuis le sous-système d'admission et de commande de ressources, et envoyer le message de suppression de politique de trafic de données au module d'exécution de politique de trafic (602) ; et
le module d'exécution de politique de trafic (602) est configuré en outre pour supprimer la politique de trafic de données sauvegardée.

9. Sous-système d'admission et de commande de ressources comprenant une fonction d'admission et de commande de ressources d'accès, A-RACF, et une fonction de décision de politique basée sur les services, SPDF, dans lequel la SPDF est configurée pour établir une politique de trafic de données et envoyer la politique de trafic de données à l'A-RACF, et **caractérisé en ce que**
l'A-RACF comprend :
un module de génération de politiques de trafic (421), configuré pour convertir une politique de trafic de données reçue de la SPDF et générer une première politique de trafic de données et une seconde politique de trafic de données, dans lequel la première politique de trafic de données et la seconde politique de trafic de données sont exécutées sur un trafic de données ascendant, et la première politique de trafic de données et la seconde politique de trafic de données délivrées par le sous-système d'admission et de commande de ressources comprennent un identifiant de canal logique pour identifier un canal logique correspondant à une politique de trafic présentement délivrée, une priorité de trafic de données pour identifier une priorité du trafic de données ascendant correspondant à une politique de trafic de données présentement délivrée, et un seuil de largeur de bande pour déterminer la largeur de bande maximum du trafic de données ascendant correspondant à une politique de trafic de données présentement délivrée, respectivement ; et
un module de délivrance de politiques de trafic (422), configuré pour délivrer la première politique de trafic de données à l'équipement d'abonné et délivrer la seconde politique de trafic de données au noeud d'accès (207) respectivement.

10. Sous-système selon la revendication 9, dans lequel :
le sous-système d'admission et de commande de ressources est connecté au noeud d'accès (207) par l'intermédiaire d'une interface Ra,
le sous-système d'admission et de commande de ressources est connecté à l'équipement d'abonné (208) par l'intermédiaire d'une interface Ru.

11. Sous-système selon la revendication 9 ou 10, dans lequel l'A-RACF comprend :
un moyen d'obtention d'une condition de ressource de QoS du noeud d'accès, dans lequel la condition de ressource de QoS est obtenue en transmettant un message de requête pour demander une condition de ressource de QoS au noeud d'accès et recevoir la condition de ressource de QoS renvoyée par le noeud d'accès, ou en consultant les enregistrements mémorisés localement de la condition de ressource de QoS du noeud d'accès.
